# EUROPEAN PATENT APPLICATION

(11) **EP 3 755 082 A1**
(43) Date of publication of application: **23.12.2020**
(21) Application number: 18904973.7
(22) Date of filing: 12.02.2018
(51) Int. Cl.: H04W 72/04

(54) **CHANNEL TRANSMISSION METHOD AND APPARATUS, AND COMPUTER STORAGE MEDIUM**

(71) Applicant: GUANGDONG OPPO MOBILE TELECOMMUNICATIONS CORP., LTD., Wusha, Chang'an Dongguan Guangdong 523860 (CN)
(72) Inventor: TANG, Hai, Dongguan, Guangdong 523860 (CN)
(74) Representative: Novagraaf Technologies
(86) International application number: PCT/CN2018/076567
(87) International publication number: WO 2019/153358

(57) **Abstract**

Disclosed are a channel transmission method and apparatus, and a computer storage medium. The method comprises: a terminal device receiving first information, wherein the first information is used for indicating a first transmission resource and a second transmission resource allocated by a network device to the terminal device in a first time unit, the first transmission resource is used for transmitting a first uplink control channel, and the second transmission resource is used for transmitting a second uplink control channel; and the terminal device transmitting, based on a channel detection result and in the first time unit, the first uplink control channel and/or the second uplink control channel.

## Description

### TECHNICAL FIELD

Embodiments of the present disclosure generally relate to wireless communication technologies, and more particularly, to channel transmission methods and devices and a computer storage medium.

### BACKGROUND

With the development of wireless communication technologies, the Licensed-Assisted Access-Long Term Evolution (LAA-LTE) which is based on the Long Term Evolution (LTE) system is proposed. The LAA-LTE is based on the carrier aggregation structure and provides services for terminal device with the carrier in the licensed spectrum as the primary carrier and the carrier in the unlicensed spectrum as the secondary carrier. When the new radio (NR) system is applied to the unlicensed spectrum, in addition to supporting the LAA networking, it also supports the Standalone (SA) networking. Thus, the transmission of the Physical Uplink Control Channel (PUCCH) in the unlicensed spectrum needs to be considered.

In the NR system, PUCCH includes multiple formats, and each PUCCH format includes multiple symbol lengths, as shown in Table 1.

**Table 1: PUCCH formats**

| PUCCH format | Number of symbols included in PUCCH | Number of bits carried on PUCCH |
|---|---|---|
| 0 | 1 ∼ 2 | ≤2 |
| 1 | 4 ∼ 14 | ≤2 |
| 2 | 1 ∼ 2 | >2 |
| 3 | 4 ∼ 14 | >2 |
| 4 | 4 ∼ 14 | >2 |

The network device may configure one or more of PUCCH formats 0, 1, 2, 3, and 4 for a terminal device. The configuration information of a PUCCH resource includes at least the position of the starting symbol of the PUCCH and the number of symbols included in the PUCCH. Specifically, for PUCCH formats 0 and 2, the number of symbols included in the PUCCH is 1 or 2; for PUCCH formats 1, 3, and 4, the PUCCH includes any number of symbols from 4 to 14.

Before sending uplink signals, a terminal device needs to detect the channel on the unlicensed spectrum by Clear Channel Assessment (CCA). When the channel is idle, the PUCCH can be sent; otherwise, the PUCCH cannot be sent. When the priority of the control information transmitted in the PUCCH is high, if the PUCCH cannot be sent due to the failure of channel detection, there will be great influence on the delay/performance of the entire link.

### SUMMARY

In order to address the above problems, embodiments of the present disclosure provide a channel transmission device and method, and a computer storage medium, which can increase transmission probability of PUCCH on unlicensed spectrum.

According to a first aspect, there is provided a channel transmission method, including:
receiving, by a terminal device, first information, wherein the first information is used to indicate at least two transmission resources allocated by a network device for the terminal device on a first time unit, the at least two transmission resources include a first transmission resource and a second transmission resource, the first transmission resource is used to transmit a first uplink control channel, and the second transmission resource is used to transmit a second uplink control channel; and
transmitting, by the terminal device, the first uplink control channel and/or the second uplink control channel on the first time unit based on a channel detection result.

According to an exemplary embodiment, a starting symbol of the second transmission resource is later than a starting symbol of the first transmission resource; and
wherein the first transmission resource and the second transmission resource are spaced by at least one symbol in a time domain.

According to an exemplary embodiment, transmitting, by the terminal device, the first uplink control channel and/or the second uplink control channel on the first time unit based on a channel detection result includes:
performing, by the terminal device, channel detection before the starting symbol of the first transmission resource; if it is determined that the channel detection is successful before the starting symbol of the first transmission resource, transmitting, by the terminal device, the first uplink control channel from the starting symbol of the first transmission resource; and if it is determined that the channel detection fails before the starting symbol of the first transmission resource, the terminal device not transmitting the first uplink control channel; and
performing, by the terminal device, the channel detection before the starting symbol of the second transmission resource; if it is determined that the channel detection is successful before the starting symbol of the second transmission resource, transmitting, by the terminal device, the second uplink control channel from the starting symbol of the second transmission resource; and if it is determined that the channel detection fails before the starting symbol of the second transmission resource, the terminal device not transmitting the second uplink control channel.

According to an exemplary embodiment, a starting symbol of the second transmission resource is later than a starting symbol of the first transmission resource; and
wherein the first transmission resource and the second transmission resource are adjacent in a time domain and do not overlap one another.

According to an exemplary embodiment, transmitting, by the terminal device, the first uplink control channel and/or the second uplink control channel on the first time unit based on a channel detection result, includes:
performing, by the terminal device, channel detection before the starting symbol of the first transmission resource;
if it is determined that the channel detection is successful before the starting symbol of the first transmission resource, transmitting, by the terminal device, the first uplink control channel from the starting symbol of the first transmission resource, and transmitting the second uplink control channel after transmission of the first uplink control channel is completed; and
if it is determined that the channel detection fails before the starting symbol of the first transmission resource, the terminal device not transmitting the first uplink control channel, and performing channel detection before the starting symbol of the second transmission resource; if it is determined that the channel detection is successful before the starting symbol of the second transmission resource, transmitting, by the terminal device, the second uplink control channel from the starting symbol of the second transmission resource.

According to an exemplary embodiment, a starting symbol of the second transmission resource is later than a starting symbol of the first transmission resource; and
wherein there is at least one symbol overlap between the first transmission resource and the second transmission resource in a time domain.

According to an exemplary embodiment, transmitting, by the terminal device, the first uplink control channel and/or the second uplink control channel on the first time unit based on a channel detection result, includes:
performing, by the terminal device, channel detection before the starting symbol of the first transmission resource;
if it is determined that the channel detection is successful before the starting symbol of the first transmission resource, transmitting, by the terminal device, the first uplink control channel from the starting symbol of the first transmission resource, and not transmitting the second uplink control channel;
if it is determined that the channel detection fails before the starting symbol of the first transmission resource, the terminal device not transmitting the first uplink control channel, and performing channel detection before the starting symbol of the second transmission resource; if it is determined that the channel detection is successful before the starting symbol of the second transmission resource, transmitting, by the terminal device, the second uplink control channel from the starting symbol of the second transmission resource.

According to an exemplary embodiment, the terminal device transmits same first uplink control information on the first uplink control channel and the second uplink control channel.

According to an exemplary embodiment, the terminal device transmits information having a low priority in first uplink control information on the first uplink control channel, and transmits information having a high priority in the first uplink control information on the second uplink control channel.

According to an exemplary embodiment, the terminal device transmits channel state information on the first uplink control channel, and transmits hybrid automatic repeat request information or scheduling request information on the second uplink control channel.

According to a second aspect, there is provided a channel transmission method, including:
receiving, by the terminal device, second information, wherein the second information is used to indicate a first transmission resource allocated by a network device for the terminal device on a first time unit, the first transmission resource is used to transmit a first uplink control channel and includes at least two starting symbols, and the at least two starting symbols include a first starting symbol and a second starting symbol, and the second starting symbol is later than the first starting symbol; and
transmitting, by the terminal device, the first uplink control channel from the first starting symbol or the second starting symbol on the first time unit based on a channel detection result.

According to an exemplary embodiment, transmitting, by the terminal device, the first uplink control channel from the first starting symbol or the second starting symbol on the first time unit based on a channel detection result includes:
performing, by the terminal device, channel detection before the first starting symbol;
if it is determined that the channel detection is successful before the first starting symbol, transmitting, by the terminal device, the first uplink control channel from the first starting symbol;
if it is determined that the channel detection fails before the first starting symbol, performing, by the terminal device, the channel detection before the second starting symbol; if it is determined that the channel detection is successful before the second starting symbol, transmitting, by the terminal device, the first uplink control channel from the second starting symbol; if it is determined that the channel detection fails before the second starting symbol, the terminal device not transmitting the first uplink control channel.

According to an exemplary embodiment, when the terminal device transmits the first uplink control channel from the first starting symbol, the first uplink control channel carries first transmission information, and the first transmission information is obtained by rate matching from the first starting symbol after the first uplink control information is encoded; and
when the terminal device transmits the first uplink control channel from the second starting symbol, the first uplink control channel carries second transmission information, the second transmission information is a part of the first transmission information and is obtained by rate matching from the second starting symbol after the first uplink control information is encoded.

According to an exemplary embodiment, when the terminal device transmits the first uplink control channel from the first starting symbol, the first uplink control channel carries first transmission information, and the first transmission information is obtained by rate matching from the first starting symbol after the first uplink control information is encoded; and
when the terminal device transmits the first uplink control channel from the second starting symbol, the first uplink control channel carries second transmission information, the second transmission information is a part of the first transmission information and is obtained by rate matching from the first starting symbol after the first uplink control information is encoded.

According to an exemplary embodiment, when the terminal device transmits the first uplink control channel from the first starting symbol, the first uplink control channel carries first transmission information, and the first transmission information is obtained by rate matching from the first starting symbol after the first uplink control information is encoded; and
when the terminal device transmits the first uplink control channel from the second starting symbol, the first uplink control channel carries second transmission information, and the second transmission information is obtained by rate matching from the second starting symbol after the first uplink control information is encoded.

According to a third aspect, there is provided a channel transmission method, including:
transmitting, by a network device, first information to a terminal device, wherein the first information is used to indicate at least two transmission resources allocated by the network device for the terminal device on a first time unit, the at least two transmission resources include a first transmission resource and a second transmission resource, the first transmission resource is used to transmit a first uplink control channel, and the second transmission resource is used to transmit a second uplink control channel; and
receiving, by the network device, the first uplink control channel and/or the second uplink control channel on the first time unit.

According to an exemplary embodiment, a starting symbol of the second transmission resource is later than a starting symbol of the first transmission resource; and
wherein the first transmission resource and the second transmission resource are spaced by at least one symbol in a time domain..

According to an exemplary embodiment, receiving, by the network device, the first uplink control channel and/or the second uplink control channel on the first time unit, includes:
detecting, by the network device, the first uplink control channel on the first transmission resource, and detecting the second uplink control channel on the second transmission resource.

According to an exemplary embodiment, a starting symbol of the second transmission resource is later than a starting symbol of the first transmission resource; and
wherein the first transmission resource and the second transmission resource are adjacent in a time domain and do not overlap one another.

According to an exemplary embodiment, receiving, by the network device, the first uplink control channel and/or the second uplink control channel on the first time unit, includes:
detecting, by the network device, the first uplink control channel on the first transmission resource;
if it is determined that the first uplink control channel is detected on the first transmission resource, receiving, by the network device, the first uplink control channel on the first transmission resource and receiving the second uplink control channel on the second transmission resource; and
if it is determined that the first uplink control channel is not detected on the first transmission resource, detecting, by the network device, the second uplink control channel on the second transmission resource.

According to an exemplary embodiment, a starting symbol of the second transmission resource is later than a starting symbol of the first transmission resource; and
wherein there is at least one symbol overlap between the first transmission resource and the second transmission resource in a time domain.

According to an exemplary embodiment, receiving, by the network device, the first uplink control channel and/or the second uplink control channel on the first time unit, includes:
detecting, by the network device, the first uplink control channel on the first transmission resource;
if it is determined that the first uplink control channel is detected on the first transmission resource, receiving, by the network device, the first uplink control channel on the first transmission resource, and not detecting the second uplink control channel on the second transmission resource; and
if it is determined that the first uplink control channel is not detected on the first transmission resource, detecting, by the network device, the second uplink control channel on the second transmission resource.

According to an exemplary embodiment, the first information is further used to indicate that the terminal device transmits same first uplink control information on the first uplink control channel and the second uplink control channel.

According to an exemplary embodiment, the first information is further used to indicate that the terminal device transmits information having a low priority in first uplink control information on the first uplink control channel, and transmits information having a high priority in the first uplink control information on the second uplink control channel.

According to an exemplary embodiment, the first information is further used to indicate that the terminal device transmits channel state information on the first uplink control channel, and transmits hybrid automatic repeat request information or scheduling request information on the second uplink control channel.

According to a fourth aspect, there is provided a channel transmission method, including:
transmitting, by a network device, second information to a terminal device, wherein the second information is used to indicate a first transmission resource allocated by the network device for the terminal device on a first time unit, the first transmission resource is used to transmit a first uplink control channel and includes at least two starting symbols, and the at least two starting symbols include a first starting symbol and a second starting symbol, and the second starting symbol is later than the first starting symbol; and
receiving, by the network device, the first uplink control channel from the first starting symbol or the second starting symbol on the first time unit.

According to an exemplary embodiment, receiving, by the network device, the first uplink control channel from the first starting symbol or the second starting symbol on the first time unit, includes:
detecting, by the network device, the first uplink control channel from the first starting symbol;
if it is determined that the first uplink control channel is detected from the first starting symbol, receiving, by the network device, the first uplink control channel from the first starting symbol; and
if it is determined that the first uplink control channel is not detected from the first starting symbol, detecting, by the network device, the first uplink control channel from the second starting symbol.

According to an exemplary embodiment, when the network device receives the first uplink control channel from the first starting symbol, the first uplink control channel carries first transmission information, and the first transmission information is obtained by rate matching from the first starting symbol after the first uplink control information is encoded;
when the network device receives the first uplink control channel from the second starting symbol, the first uplink control channel carries second transmission information, the second transmission information is a part of the first transmission information and is obtained by rate matching from the second starting symbol after the first uplink control information is encoded.

According to an exemplary embodiment, when the network device receives the first uplink control channel from the first starting symbol, the first uplink control channel carries first transmission information, and the first transmission information is obtained by rate matching from the first starting symbol after the first uplink control information is encoded; and
when the network device receives the first uplink control channel from the second starting symbol, the first uplink control channel carries second transmission information, the second transmission information is a part of the first transmission information and is obtained by rate matching from the first starting symbol after the first uplink control information is encoded.

According to an exemplary embodiment, when the network device receives the first uplink control channel from the first starting symbol, the first uplink control channel carries first transmission information, and the first transmission information is obtained by rate matching from the first starting symbol after the first uplink control information is encoded; and
when the network device receives the first uplink control channel from the second starting symbol, the first uplink control channel carries second transmission information, and the second transmission information is obtained by rate matching from the second starting symbol after the first uplink control information is encoded.

According to a fifth aspect, there is provided a channel transmission device. The channel transmission device is configured to perform methods in the first aspect or any exemplary embodiment of the first aspect or to perform methods in the second aspect or any exemplary embodiment of the second aspect. For example, the device includes units configured to perform methods in the first aspect or any exemplary embodiment of the first aspect or to perform methods in the second aspect or any exemplary embodiment of the second aspect.

According to a sixth aspect, there is provided a channel transmission device. The channel transmission device is configured to perform methods in the third aspect or any exemplary embodiment of the third aspect or to perform methods in the fourth aspect or any exemplary embodiment of the fourth aspect. For example, the device includes units configured to perform methods in the third aspect or any exemplary embodiment of the third aspect or to perform methods in the fourth aspect or any exemplary embodiment of the fourth aspect.

According to a seventh aspect, there is provided device for transmitting a channel. The device includes: a memory, a processor, an input interface, and an output interface. The memory, the processor, the input interface and the output interface are connected through a bus system. The memory is configured to store instructions, and the processor is configured to execute the instructions stored in the memory to perform methods in the first aspect or any exemplary embodiment of the first aspect or to perform methods in the second aspect or any exemplary embodiment of the second aspect.

According to an eighth aspect, there is provided a device for transmitting a channel. The device includes: a memory, a processor, an input interface, and an output interface. The memory, the processor, the input interface and the output interface are connected through a bus system. The memory is configured to store instructions, and the processor is configured to execute the instructions stored in the memory to perform methods in the third aspect or any exemplary embodiment of the third aspect or to perform methods in the fourth aspect or any exemplary embodiment of the fourth aspect.

According to a ninth aspect, there is provided a computer storage medium. The computer storage medium is configured to store computer software instructions for performing methods in the first aspect or any exemplary embodiment of the first aspect or performing methods in the second aspect or any exemplary embodiment of the second aspect. The computer software instructions include the programs designed for the above aspects.

According to a tenth aspect, there is provided a computer storage medium. The computer storage medium is configured to store computer software instructions for performing methods in the third aspect or any exemplary embodiment of the third aspect or performing methods in the fourth aspect or any exemplary embodiment of the fourth aspect. The computer software instructions include the programs designed for the above aspects.

According to an eleventh aspect, there is provided a computer program product including instructions, which when executed on a computer, cause the computer to perform the methods in the first aspect or any exemplary embodiment of the first aspect or perform methods in the second aspect or any exemplary embodiment of the second aspect.

According to a twelfth aspect, there is provided a computer program product including instructions, which when executed on a computer, cause the computer to perform the methods in the third aspect or any exemplary embodiment of the third aspect or perform methods in the fourth aspect or any exemplary embodiment of the fourth aspect.

In the technical solutions according to embodiments of the present disclosure, 1) the terminal device receives first information, and the first information is used to first information is used to indicate at least two transmission resources allocated by a network device for the terminal device on a first time unit, the at least two transmission resources include a first transmission resource and a second transmission resource, the first transmission resource is used to transmit a first uplink control channel, and the second transmission resource is used to transmit a second uplink control channel; the terminal device transmits the first uplink control channel and/or the second uplink control channel on the first time unit based on a channel detection result. 2) The terminal device receives second information, and the second information is used to indicate a first transmission resource allocated by a network device for the terminal device on a first time unit, the first transmission resource is used to transmit a first uplink control channel and includes at least two starting symbols, and the at least two starting symbols include a first starting symbol and a second starting symbol, and the second starting symbol is later than the first starting symbol; and the terminal device transmits the first uplink control channel from the first starting symbol or the second starting symbol on the first time unit based on a channel detection result. Using the technical solutions according to embodiments of the present disclosure, when the uplink control information is fed back on the unlicensed carrier, at least two PUCCH resources (such as a first PUCCH resource and a second PUCCH resource) are allocated to the terminal device on the time unit where the PUCCH used to transmit the uplink control information is located. In this way, the terminal device has a certain probability to perform transmission on the second PUCCH resource when the transmission of the first PUCCH resource on the time unit fails. Alternatively, a PUCCH resource is allocated for the terminal device on the time unit where the PUCCH used to transmit the uplink control information is located, and two starting symbols are configured for the PUCCH resource (such as a first starting symbol and a second starting symbol). In this way, when the transmission from the first starting symbol of the time unit fails, there is a certain probability for the terminal device to start transmission from the second starting symbol. Accordingly, embodiments of the present disclosure can increase the chance for the terminal device to transmit the uplink control information, thereby satisfying the delay requirements and ensuring performance of the communication link.

### BRIEF DESCRIPTION OF THE DRAWINGS

The drawings, which constitute a part of the specification, are used to provide a further understanding of the present disclosure. The exemplary embodiments of the present disclosure and their descriptions are used to explain the present disclosure and do not constitute an undue limitation on the present disclosure.
FIG 1 is a schematic flowchart of a channel transmission method according to an embodiment of the present disclosure.
FIG 2 is a schematic diagram showing a first PUCCH resource and a second PUCCH resource according to an embodiment of the present disclosure.
FIG 3 is a schematic flowchart of a channel transmission method according to an embodiment of the present disclosure.
FIG 4 is a schematic diagram showing positions of a first starting symbol and a second starting symbol in a first PUCCH resource according to an embodiment of the present disclosure.
FIG 5 is a schematic diagram showing first transmission information and second transmission information according to an embodiment of the present disclosure.
FIG 6 is a schematic flowchart of a channel transmission method according to an embodiment of the present disclosure.
FIG 7 is a schematic flowchart of a channel transmission method according to an embodiment of the present disclosure.
FIG 8 is a schematic block diagram of a channel transmission device according to an embodiment of the present disclosure.
FIG 9 is a schematic block diagram of a channel transmission device according to an embodiment of the present disclosure.
FIG 10 is a schematic block diagram of a channel transmission device according to an embodiment of the present disclosure.
FIG 11 is a schematic block diagram of a channel transmission device according to an embodiment of the present disclosure.
FIG 12 is a schematic structural diagram of a computer device according to an embodiment of the present disclosure.

### DETAILED DESCRIPTION

Related technologies involved in embodiments of the present disclosure are set forth to provide a thorough understanding of the technical solutions provided by embodiments of the present disclosure.

### 1) Unlicensed Spectrum

Unlicensed spectrum is a spectrum allocated by countries and regions that can be used for communication between radio equipment. This spectrum is generally considered to be a shared spectrum, that is, communication devices in different communication systems can use this spectrum if the communication devices meet regulatory requirements set by the countries or regions on the spectrum, and there is no need to apply for a proprietary spectrum license from government(s). In order to allow various communication systems that use the unlicensed spectrum for wireless communication to coexist amicably on this spectrum, some countries or regions have stipulated regulatory requirements that must be met when using unlicensed spectrum. For example, in Europe, communication equipment follows the principle of Listen Before Talk (LBT), that is, the communication equipment needs to perform channel listening before transmitting signals on channels in the unlicensed spectrum, and only when the channel listening result indicates that the channel is idle, the communication equipment can send signals; if the channel listening result of the communication equipment on the channel in the unlicensed spectrum is that the channel is busy, the communication equipment cannot send signals. In addition, in order to ensure fairness, the duration for transmitting signals by the communication equipment using the channel in the unlicensed spectrum in one transmission cannot exceed the Maximum Channel Occupation Time (MCOT). For another example, in order to avoid sub-band interference to the signal transmitted on the channel in the unlicensed spectrum and to improve the detection accuracy of the communication equipment when detecting the channel in the unlicensed spectrum, the signal transmitted on the channel in unlicensed spectrum needs to occupy at least a certain proportion of the channel bandwidth. For example, for the 5GHz band, the signal occupies 80% of the channel bandwidth, and for the 60GHz band, the signal occupies 70% of the channel bandwidth. For another example, in order to avoid that the power of the signal transmitted on the channel in the unlicensed spectrum is too large, which affects the transmission of other important signals on the channel, such as radar signals, regulations stipulate the maximum power spectral density when communication equipment uses the channel in the unlicensed spectrum for signal transmission.

### 2) Network Architecture

Embodiments of the present disclosure can be applied to various communication systems, such as, Global System of Mobile Communication (GSM) system, Code Division Multiple Access (CDMA) system, Wideband Code Division Multiple Access (WCDMA) system, General Packet Radio Service (GPRS), Universal Mobile Telecommunication System (UMTS), LTE system, and evolved system of LTE system, such as Advanced Long Term Evolution (LTE-A) system, NR system and evolved system of NR system, such as NR-based access to Unlicensed spectrum (NR-U), or next-generation communication system, etc.

Generally speaking, traditional communication systems support a limited number of connections and are easy to implement. However, with the development of communication technologies, mobile communication systems will not only support traditional communication, but also support, for example, Device to Device (D2D) communication, Machine to Machine (M2M) communication, Machine Type Communication (MTC), and Vehicle to Vehicle (V2V) communication.

The communication system in embodiments of the present disclosure may be applied to a Carrier Aggregation (CA) scenario, a Dual Connectivity (DC) scenario, or a Standalone (SA) networking scenario.

Embodiments of the present disclosure are described taking examples of a network device and a terminal device.

The terminal device can also be called User Equipment (UE), access terminal, subscriber unit, user station, mobile station, mobile terminal, remote station, remote terminal, mobile device, user terminal, terminal, wireless communication device, user agent or user device. The terminal device can be a station (ST) in a Wireless Local Area Network (WLAN), a cellular phone, a cordless phone, a Session Initiation Protocol (SIP) phone, or a Wireless Local Loop (WLL) station, a Personal Digital Assistant (PDA) device, a handheld device with wireless communication capabilities, a computing device or other processing device connected to wireless modems, an in-vehicle device, a wearable device, or a terminal device in a next-generation communication systems, for example, the fifth-generation (5G) network or a terminal device in a future evolved Public Land Mobile Network (PLMN), and so on.

By way of example and not limitation, in embodiments of the present disclosure, the terminal device may also be a wearable device. The wearable device can also be referred to as a wearable smart device, which is a general term for applying wearable technology to intelligently design everyday wear and develop wearable devices, such as glasses, gloves, watches, clothing and shoes. A wearable device is a portable device that is worn directly on the body or integrated into users' clothes or accessories. The wearable device is not only a hardware device, but also realize powerful functions through software support, data interaction, and cloud interaction. Generalized wearable smart devices include full-featured and large-sized devices which can realize complete or partial functions that do not depend on smart phones, such as smart watches or smart glasses, and devices that only focus on a certain type of application functions, and need to cooperate with other devices like smart phones, such as smart bracelets for sign monitoring, or smart jewelry.

The network device may be a device for communicating with a mobile device. The network device may be an Access Point (AP) in WLAN, a base station (BTS, Base Transceiver Station) in GSM or CDMA, or a base station (NB, NodeB) in WCDMA, an evolved base station in LTE (eNB or eNodeB, Evolutional Node B), or a relay station or access point, or a vehicle-mounted device, a wearable device, a network device in an NR network, or a network in future evolved PLMN network.

In embodiments of the present disclosure, the network device provides services for a cell, and the terminal device communicates with the network device through transmission resources (for example, frequency domain resources, or spectrum resources) used by the cell. The cell may be a cell corresponding to the network device (for example, base station). The cell may belong to a macro base station or a base station corresponding to a small cell. The small cell here may include: a metro cell, a micro cell, a pico cell, a femto cell, etc. These small cells have the characteristics of small coverage and low transmit power, and are suitable for providing high-speed data transmission services.

In embodiments of the present disclosure, there may be multiple cells working in the same frequency at the same time on carriers in the LTE system or the NR system. In some special scenarios, the concepts of the carrier and the cell may be considered equivalent. For example, in a CA scenario, when a secondary carrier is configured for a UE, the carrier index of the secondary carrier and the cell ID (Cell Identity) of the secondary cell working on the secondary carrier are carried. In this case, it can be considered that the concepts of carrier and cell are the same. For example, a UE accessing a carrier is equivalent to the UE accessing a cell.

It should be noted that the Physical Uplink Control Channel (PUCCH) in embodiments of the present disclosure may be a PUCCH in the LTE system, a PUCCH in the NR system, or an uplink control channel in other systems, and embodiments of the present disclosure do not impose specific limitations on this.

It should be understood that the PUCCH may be used to transmit uplink control information. In embodiments of the present disclosure, the uplink control information may include at least one of Hybrid Automatic Repeat ReQuest (HARQ) information, Channel-State Information (CSI), Schedule Request (SR) information, and other control information sent by the UE. The CSI information includes at least one of Rank Indicator (RI) information, Precoding Matrix Indicator (PMI) information, Channel Quality Indicator (CQI) information.

It should be understood that a time unit may be defined as one or more subframes, one or more time slots, or one or more mini-slots or symbols.

In embodiments of the present disclosure, the frequency domain resources used by the network device and the terminal device for wireless communication (e.g., uplink control channel transmission) are frequency domain resources used based on the contention mechanism.

For example, the network device and/or the terminal device may detect whether a frequency domain resource with a certain bandwidth (e.g., 20 MHz) is currently in an idle state, or whether the frequency domain resource is used by other devices.

If the frequency domain resource is in an idle state, or the frequency domain resource is not used by other devices, the channel detection may be considered successful, and the network device and/or the terminal device may use the frequency domain resource for communication, for example, uplink transmission or downlink transmission.

If the frequency domain resource is not in an idle state, or the frequency domain resource is used by other devices, it may be considered that channel detection fails, and the network device and/or terminal device cannot use the frequency domain resource.

It should be noted that, in embodiments of the present disclosure, the above-mentioned methods and processes of channel detection may be similar to existing technologies. Here, in order to avoid redundant description, details are omitted.

In the NR-U system, the transmission opportunity for PUCCH needs to be increased. According to technical solutions of embodiments of the present disclosure, the network device configures at least two PUCCH transmission opportunities for the terminal device on the time unit for sending the PUCCH on a carrier in the unlicensed spectrum. This ensures the transmission of PUCCH with a higher priority, which in turn meets the delay requirements and ensure the performance of the entire communication link.

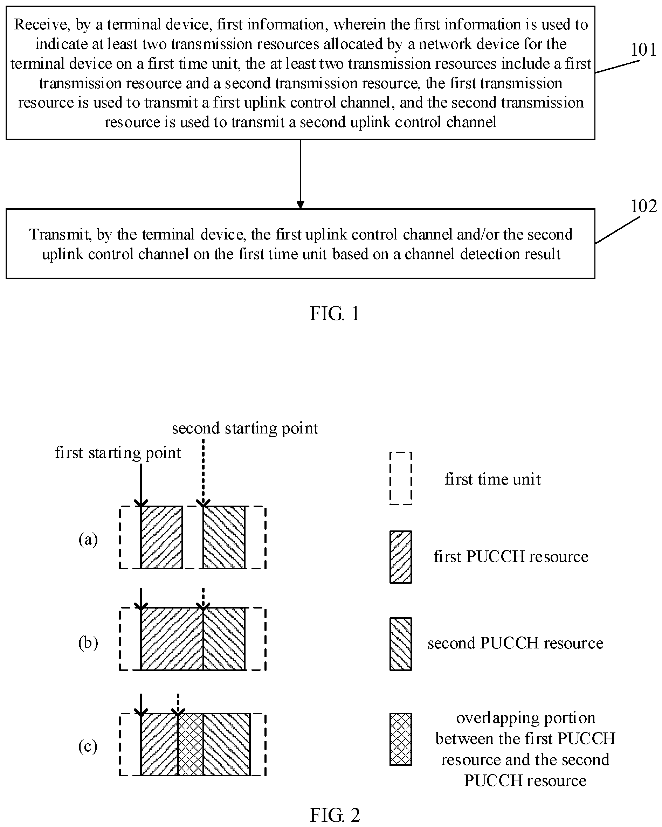

FIG 1 is a schematic flowchart of a channel transmission method according to an embodiment of the present disclosure. In the embodiment of the present disclosure, as shown in FIG 1, the channel transmission method includes the following steps:

In step 101, the terminal device receives first information. The first information is used to indicate at least two transmission resources allocated by a network device for the terminal device on a first time unit, the at least two transmission resources include a first transmission resource and a second transmission resource, the first transmission resource is used to transmit a first uplink control channel, and the second transmission resource is used to transmit a second uplink control channel.

In embodiments of the present disclosure, the terminal device may obtain the first information in the following manners:
In a first manner, the terminal device obtains the first information according to a system message, or Radio Resource Control (RRC) signaling, or Downlink Control Information (DCI) sent by a base station.
In a second manner, the terminal device obtains the first information according to a protocol.
In a third manner, the terminal device obtains the first information according to pre-configured information.

In embodiments of the present disclosure, the first information is used to indicate at least two transmission resources allocated by the network device for the terminal device on the first time unit. The at least two transmission resources include the first transmission resource (such as a first PUCCH resource) and the second transmission resource (such as a second PUCCH resource). The first transmission resource is used to transmit the first uplink control channel (such as a first PUCCH), and the second transmission resource is used to transmit the second uplink control channel (such as a second PUCCH).

According to embodiments, the first time unit is a certain time domain resource on the unlicensed carrier.

It is assumed that a starting symbol of the second transmission resource is later than a starting symbol of the first transmission resource. In embodiments of the present disclosure, the positional relationship between the first transmission resource (such as the first PUCCH resource) and the second transmission resource (such as the second PUCCH resource) may include the following cases:
Case 1: The first transmission resource (such as the first PUCCH resource) and the second transmission resource (such as the second PUCCH resource) are spaced by at least one symbol in the time domain.
Case 2: The first transmission resource (such as the first PUCCH resource) and the second transmission resource (such as the second PUCCH resource) are adjacent and do not overlap in the time domain.
Case 3: There is at least one symbol overlap between the first transmission resource (such as the first PUCCH resource) and the second transmission resource (such as the second PUCCH resource) in the time domain.

In step 102, the terminal device transmits the first uplink control channel and/or the second uplink control channel on the first time unit based on a channel detection result.

In embodiments of the present disclosure, the terminal device transmitting the first uplink control channel and/or the second uplink control channel on the first time unit based on the channel detection result may include the following situations:
1) For the above Case 1, the terminal device performs channel detection before the starting symbol of the first transmission resource; if it is determined that the channel detection is successful before the starting symbol of the first transmission resource, the terminal device transmits the first uplink control channel from the starting symbol of the first transmission resource; if it is determined that the channel detection fails before the starting symbol of the first transmission resource, the terminal device does not transmit the first uplink control channel; and the terminal device performs the channel detection before the starting symbol of the second transmission resource; if it is determined that the channel detection is successful before the starting symbol of the second transmission resource, the terminal device transmits the second uplink control channel from the starting symbol of the second transmission resource; and if it is determined that the channel detection fails before the starting symbol of the second transmission resource, the terminal device does not not transmit the second uplink control channel.
   According to embodiments, for the Case 1, a certain time domain resource may be reserved before the starting symbol of the first transmission resource and before the starting symbol of the second transmission resource. The reserved time domain resource is not used for signal transmission and may be used for the terminal device to perform channel detection.
2) For Case 2, performing, the terminal device performs channel detection before the starting symbol of the first transmission resource; if it is determined that the channel detection is successful before the starting symbol of the first transmission resource, the terminal device transmits the first uplink control channel from the starting symbol of the first transmission resource, and transmits the second uplink control channel after transmission of the first uplink control channel is completed; if it is determined that the channel detection fails before the starting symbol of the first transmission resource, the terminal device does not transmit the first uplink control channel, and performs channel detection before the starting symbol of the second transmission resource; if it is determined that the channel detection is successful before the starting symbol of the second transmission resource, the terminal device transmits the second uplink control channel from the starting symbol of the second transmission resource.
   It should be understood that in the Case 2, the first transmission resource and the second transmission resource are adjacent and do not overlap in the time domain, and when the terminal device detects that the channel is available before the start of the first transmission resource, the terminal device can use the second transmission resource without the need to perform channel detection before the second transmission resource.
3) For Case 3, the terminal device performs channel detection before the starting symbol of the first transmission resource; if it is determined that the channel detection is successful before the starting symbol of the first transmission resource, the terminal device transmits the first uplink control channel from the starting symbol of the first transmission resource, and does not transmit the second uplink control channel; if it is determined that the channel detection fails before the starting symbol of the first transmission resource, the terminal device does not transmit the first uplink control channel, and performs channel detection before the starting symbol of the second transmission resource; if it is determined that the channel detection is successful before the starting symbol of the second transmission resource, the terminal device transmits the second uplink control channel from the starting symbol of the second transmission resource.

It should be understood that in Case 3, the first transmission resource and the second transmission resource overlap in the time domain, and if the terminal device detects that the channel is available before the start of the first transmission resource, the second transmission resource may not be used.

According to embodiments, the terminal device transmits the same first uplink control information on the first uplink control channel (such as the first PUCCH resource) and the second uplink control channel (such as the second PUCCH resource).

According to embodiments, the terminal device transmits information having a low priority in first uplink control information on the first uplink control channel, and transmits information having a high priority in the first uplink control information on the second uplink control channel. For example, the terminal device transmits a part of the first uplink control information which has a low priority on the first PUCCH resource, such as Channel State Information (CSI). The terminal device a part of the first uplink control information which has a high priority on the first PUCCH resource, such as Hybrid Automatic Repeat ReQuest (HARQ) information or Scheduling Request (SR) information. The CSI feedback information includes at least one of Channel Quality Indicator (CQI) information, Precoding Matrix Indicator (PMI) information, Rank Indication (RI) information.

Referring to FIG 2, the first transmission resource is a first PUCCH resource, the second transmission resource is a second PUCCH resource, the first starting point is the starting symbol of the first PUCCH resource, and the second starting point is the starting symbol of the second PUCCH resource.

The schematic diagram (a) in FIG 2 corresponds to the Case 1, that is, the first PUCCH resource and the second PUCCH resource is spaced by at least one symbol in the time domain.

In this case, the terminal device performs channel detection before the first PUCCH resource and before the second PUCCH resource. If the channel detection before the first starting point is successful, the terminal device transmits the first PUCCH from the first starting point. If the channel detection before the first starting point fails, the terminal device does not transmit the first PUCCH. If the channel detection before the second starting point is successful, the terminal device starts to transmit the second PUCCH from the second starting point. If the channel detection before the second starting point fails, the terminal device does not transmit the second PUCCH. That is, whether the first PUCCH resource can be transmitted is independent of whether the second PUCCH resource can be transmitted, and the terminal device has two PUCCH transmission opportunities in one time unit.

According to embodiments, the channel detection performed by the terminal device before the second starting point may be a channel detection method with a high priority. For example, one-time channel listening is used, and if the channel listening indicates that the channel is idle, the terminal device may transmit the second PUCCH.

According to embodiments, the terminal device transmits the same uplink control information on the first PUCCH resource and the second PUCCH resource.

According to embodiments, the terminal device transmits uplink control information with a high priority on the first PUCCH resource, and transmits uplink control information with a low priority on the second PUCCH resource. According to embodiments, if the channel detection performed by the terminal device before the first PUCCH resource fails, the terminal device transmits uplink control information with high priority on the second PUCCH resource after the channel detection before the second PUCCH resource is successful, and the uplink control information with low priority is not transmitted.

According to embodiments, the terminal device transmits HARQ feedback information or SR information on the first PUCCH resource, and transmits CSI information on the second PUCCH resource. According to embodiments, if the channel detection performed by the terminal device before the first PUCCH resource fails, the terminal device transmits the HARQ feedback information or the SR information on the second PUCCH resource after the channel detection before the second PUCCH resource is successful, and does not transmit the CSI information.

According to embodiments, the terminal device transmits different uplink control information on the first PUCCH resource and the second PUCCH resource. If the channel detection performed by the terminal device before the first PUCCH resource fails, the terminal device transmits the uplink control information originally planned to be transmitted on the first PUCCH resource after the channel detection before the second PUCCH resource is successful.

It should be understood that using the above embodiments, it is possible to ensure that uplink control information with high priority (such as the HARQ information or the SR information) has more transmission opportunities, thereby meeting the delay requirements and ensuring performance of the communication link.

The schematic diagram (b) in FIG 2 corresponds to the Case 2, that is, the first PUCCH resource and the second PUCCH resource are adjacent but do not overlap.

In this case, the terminal device performs channel detection before the first PUCCH resource. If the channel detection before the first starting point is successful, the terminal device starts to transmit the first PUCCH from the first starting point, and then continues to transmit the second PUCCH after the transmission of the first PUCCH is completed. If the channel detection before the first starting point fails, the terminal device does not transmit the first PUCCH, and performs channel detection before the second starting point; if the channel detection is successful, the terminal device starts to transmit the second PUCCH from the second starting point.

It should be understood that in this case, if the channel detection performed by the terminal device before the first starting point is successful, the first PUCCH and the second PUCCH may be transmitted.

According to embodiments, the channel detection performed by the terminal device before the second starting point may be a channel detection method with a high priority. For example, one-time channel listening is used, and if the channel listening indicates that the channel is idle, the terminal device may transmit the second PUCCH.

According to embodiments, the terminal device transmits the same uplink control information on the first PUCCH resource and the second PUCCH resource.

According to embodiments, the terminal device transmits uplink control information with a low priority on the first PUCCH resource, and transmits uplink control information with a high priority on the second PUCCH resource.

According to embodiments, the terminal device transmits the CSI information on the first PUCCH resource, and transmits the HARQ feedback information or the SR information on the second PUCCH resource.

According to embodiments, the terminal device transmits different uplink control information on the first PUCCH resource and the second PUCCH resource. If the channel detection performed by the terminal device before the first PUCCH resource fails, the terminal device transmits the uplink control information originally planned to be transmitted on the first PUCCH resource after the channel detection before the second PUCCH resource is successful.

It can be understood that using the embodiments of the present disclosure, the probability that the second PUCCH resource can be used by the terminal device is higher than that the probability that the first PUCCH resource can be used by the terminal device, and transmitting uplink control information with a high priority (such as the HARQ information or the SR information) on the second PUCCH resource is helpful for meeting the delay requirements and ensuring the performance of the communication link.

The schematic diagram (c) in FIG 2 corresponds to Case 3, that is, there is at least one symbol overlap between the first PUCCH resource and the second PUCCH resource in the time domain.

In this case, the terminal device performs channel detection before the first PUCCH resource. If the channel detection before the first starting point is successful, the terminal device transmits the first PUCCH from the first starting point and does not transmit the second PUCCH; if the channel detection before the first starting point fails, the terminal device does not transmit the first PUCCH, and performs channel detection before the second starting point. If the channel detection is successful, the terminal device starts to transmit the second PUCCH from the second starting point.

According to embodiments, the channel detection performed by the terminal device before the second starting point may be a channel detection method with a high priority. For example, one-time channel listening is used, and if the channel listening indicates that the channel is idle, the terminal device may transmit the second PUCCH.

In this case, the terminal device may transmit the first PUCCH on the first time unit, or the terminal device may transmit the second PUCCH on the first time unit, or the terminal device does not transmit any PUCCH on the first time unit.

According to embodiments, the terminal device transmits the same uplink control information on the first PUCCH resource or the second PUCCH resource. According to embodiments, the uplink control information is uplink control information with a high priority. According to embodiments, the uplink control information includes at least one of the HARQ feedback information and the SR information.

According to embodiments, the terminal device transmits the first uplink control information on the first PUCCH resource. According to embodiments, if the channel detection performed by the terminal device before the first PUCCH resource fails, the terminal device transmits the first uplink control information on the second PUCCH resource after the channel detection before the second PUCCH resource is successful.

According to embodiments, the terminal device transmits the HARQ feedback information or the SR information on the first PUCCH resource, and transmits the CSI information on the second PUCCH resource. According to embodiments, if the channel detection performed by the terminal device before the first PUCCH resource, the terminal device transmits the HARQ feedback information or the SR information on the second PUCCH resource, and does not transmit the CSI information.

According to embodiments, the terminal device transmits different uplink control information on the first PUCCH resource and the second PUCCH resource. If the channel detection performed by the terminal device before the first PUCCH resource fails, the terminal device transmits on the second PUCCH resource the uplink control information which is originally planned to be transmitted on the first PUCCH resource.

It should be understood that using the embodiments of the present disclosure, it is possible to ensure that uplink control information with high priority (such as the HARQ information or the SR information) has more transmission opportunities, thereby helping to meet the delay requirements and performance of the communication link.

In the technical solutions according to embodiments of the present disclosure, when the uplink control information is fed back on the unlicensed carrier, at least two PUCCH resources (such as the first PUCCH resource and the second PUCCH resource) are allocated to the terminal device on the time unit where the PUCCH used to transmit the uplink control information is located. In this way, when the transmission on the first PUCCH resource on the time unit fails, there is a certain probability for the terminal device to perform transmission on the second PUCCH resource. Accordingly, embodiments of the present disclosure can increase the chance for the terminal device to transmit the uplink control information, thereby satisfying the delay requirements and ensuring performance of the communication link.

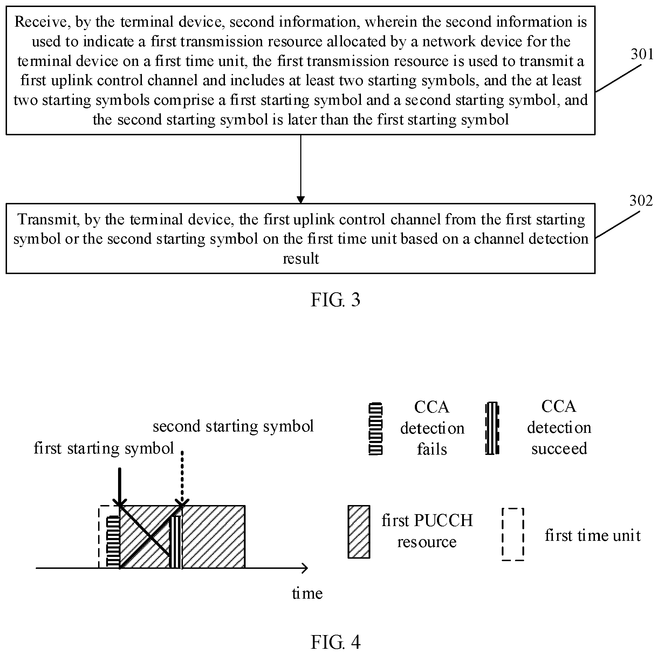

FIG 3 is a second schematic flowchart of a channel transmission method according to an embodiment of the present disclosure. In the embodiment of the present disclosure, as shown in FIG 3, the channel transmission method includes the following steps:

In step 301, the terminal device receives second information. The second information is used to indicate a first transmission resource allocated by a network device for the terminal device on a first time unit, the first transmission resource is used to transmit a first uplink control channel and include at least two starting symbols, and the at least two starting symbols include a first starting symbol and a second starting symbol, and the second starting symbol is later than the first starting symbol.

In embodiments of the present disclosure, the terminal device may obtain the second information in the following manners:

In a first manner, the terminal device obtains the second information according to a system message, or RRC signaling, or DCI sent by a base station.

In a second manner, the terminal device obtains the second information according to a protocol.

In a third manner, the terminal device obtains the second information according to pre-configured information.

In embodiments of the present disclosure, the second information is used to indicate the first transmission resource (such as the first PUCCH resource) allocated by the network device for the terminal device on the first time unit. The first transmission resource is used for transmission the first uplink control channel. The first transmission resource includes at least two starting symbols. The at least two starting symbols include a first starting symbol and a second starting symbol, and the second starting symbol is later than the first starting symbol.

In step 302, the terminal device transmits the first uplink control channel from the first starting symbol or the second starting symbol on the first time unit based on a channel detection result.

In embodiments of the present disclosure, the terminal device may transmit the first uplink control channel from the first starting symbol or the second starting symbol on the first time unit based on the channel detection result in the following manner:

The terminal device performs channel detection before the first starting symbol; if it is determined that the channel detection is successful before the first starting symbol, the terminal device transmits the first uplink control channel from the first starting symbol; if it is determined that the channel detection fails before the first starting symbol, the terminal device performs the channel detection before the second starting symbol; if it is determined that the channel detection is successful before the second starting symbol, the terminal device transmits the first uplink control channel from the second starting symbol; if it is determined that the channel detection fails before the second starting symbol, the terminal device does not transmit the first uplink control channel.

Referring to FIG 4, the first transmission resource is a first PUCCH resource, the first starting point is a first starting symbol on the first PUCCH resource, and the second starting point is a second starting symbol on the first PUCCH resource.

As shown in FIG 4, if the channel detection performed by the terminal device before the first starting point is successful, the terminal device transmits the first PUCCH from the first starting point. If the channel detection before the first starting point fails, the terminal device does not transmit the first PUCCH between the first point and the second starting point, and the terminal device performs channel detection before the second starting point. If the channel detection performed by the terminal device before the second starting point is successful, the terminal device start to transmit the first PUCCH from the second starting point. If the channel detection before the second starting point fails, the terminal device does not transmit the first PUCCH.

In embodiments of the present disclosure, when the terminal device transmits the first uplink control channel from the first starting symbol, the first uplink control channel carries first transmission information. The first transmission information is obtained by rate matching from the first starting symbol after the first uplink control information is encoded.

In embodiments of the present disclosure, when the terminal device transmits the first uplink control channel from the second starting symbol, the first uplink control channel carries second transmission information. The terminal device transmitting the first uplink control channel from the second starting symbol may include one of the following cases:
Case 1: When the terminal device starts to transmit the first uplink control channel from the second starting symbol, the first uplink control channel carries second transmission information, and the second transmission information is a part of the first transmission information and is obtained by rate matching from the first starting symbol after the first uplink control information is encoded.
Case 2: when the terminal device starts to transmit the first uplink control channel from the second starting symbol, the first uplink control channel carries second transmission information. The second transmission information is a part of the first transmission information, and the second transmission information is obtained by rate matching from the second starting symbol after the first uplink control information is encoded.
Case 3: when the terminal device starts to transmit the first uplink control channel from the second starting symbol, the first uplink control channel carries second transmission information. The second transmission information is obtained by rate matching from the second starting symbol after the first uplink control information is encoded.

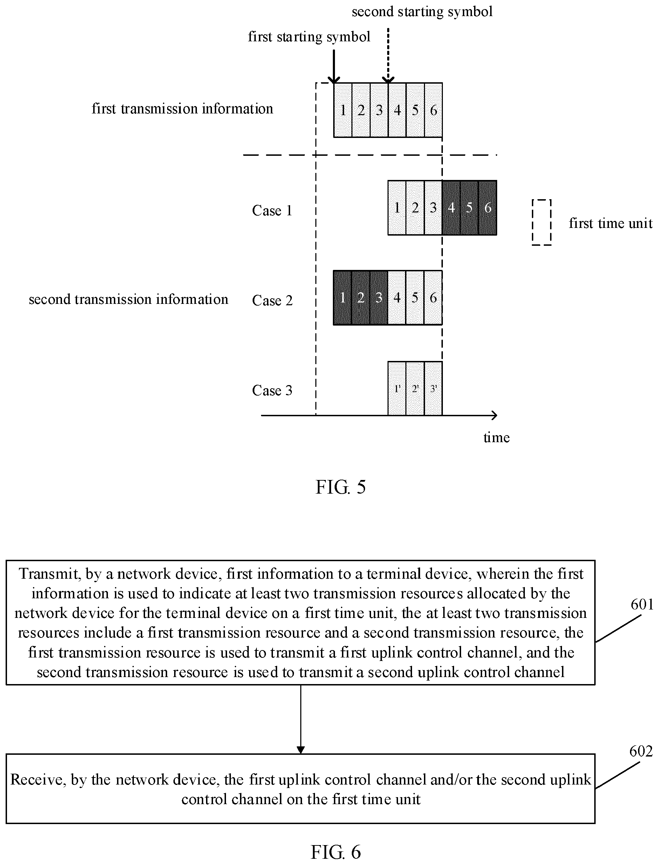

The first transmission information and the second transmission information will be described below using FIG 5 as an example. As shown in FIG 5, it is assumed that the first PUCCH resource occupies 6 symbols, the first PUCCH resource is used to transmit the first uplink control information, and the two starting symbols included in the first PUCCH resource are the first symbol and the fourth symbol in the first PUCCH resource. It is assumed that when the terminal device starts to transmit the first PUCCH from the first symbol, the first PUCCH carries the first transmission information, that is, the first transmission information is obtained by rate matching of six symbols from the first symbol after the first uplink control information is encoded. For ease of description, the content transmitted by the first transmission information on the 6 symbols is marked as 1∼6, respectively.

When the terminal device starts to transmit the first PUCCH from the fourth symbol, the first PUCCH carries the second transmission information, and the second transmission information may include one of the following three cases:
Case 1: The second transmission information is a part of the first transmission information, and the second transmission information is obtained by rate matching starting from the first symbol. That is, as shown in FIG 5, the second transmission information is the parts marked 1 to 3 in the first transmission information. When transmitting the first PUCCH, the terminal device may discard the parts marked 4 to 6 in the first transmission information due to limited resources, which is simple to implement.
Case 2: The second transmission information is a part of the first transmission information, and the second transmission information is obtained by rate matching starting from the fourth symbol. That is, as shown in FIG. 5, the second transmission information is the parts marked 4 to 6 in the first transmission information. When the terminal device transmits the first PUCCH, the terminal device may discard the parts marked 1 to 3 in the first transmission information due to limited resources, which is simple to implement.
Case 3: The second transmission information is obtained by rate matching of three symbols starting from the fourth symbol. For ease of description, the contents of the second transmission information transmitted on the 3 symbols can be marked as 1'∼3'. That is, when the terminal device transmits the first PUCCH, due to the limited resources, it is needed to perform rate matching on the first uplink control information again. Compared with Case 1 and Case 2, the implementation of Case 3 is more complicated, but it is possible to obtain better demodulation performance.

According to technical solutions according to embodiments of the present disclosure, when the uplink control information is fed back on the unlicensed carrier, a PUCCH resource is allocated for the terminal device on the time unit where the PUCCH used to transmit the uplink control information is located, and two starting symbols are configured for the PUCCH resource (such as a first starting symbol and a second starting symbol). In this way, when the transmission from the first starting symbol of the time unit fails, there is a certain probability for the terminal device to start transmission from the second starting symbol. Accordingly, embodiments of the present disclosure can increase the chance for the terminal device to transmit the uplink control information, thereby satisfying the delay requirements and ensuring performance of the communication link.

FIG. 6 is a schematic flowchart of a channel transmission method according to an embodiment of the present disclosure. In the embodiment of the present disclosure, as shown in FIG. 6, the channel transmission method includes the following steps:
In step 601, the network device sends first information to the terminal device. The first information is used to indicate at least two transmission resources allocated by the network device for the terminal device on a first time unit, the at least two transmission resources include a first transmission resource and a second transmission resource, the first transmission resource is used to transmit a first uplink control channel, and the second transmission resource is used to transmit a second uplink control channel.

In embodiments of the present disclosure, the starting symbol of the second transmission resource is later than the starting symbol of the first transmission resource. The positional relationship between the first transmission resource and the second transmission resource may include the following cases:
Case 1: The first transmission resource and the second transmission resource are separated by at least one symbol in the time domain.
Case 2: The first transmission resource and the second transmission resource are adjacent and do not overlap in the time domain.
Case 3: There is at least one symbol overlap between the first transmission resource and the second transmission resource.

In step 602, the network device receives the first uplink control channel and/or the second uplink control channel on the first time unit.

For the Case 1, the network device detects the first uplink control channel on the first transmission resource, and detects the second uplink control channel on the second transmission resource.

For the Case 2, the network device detects the first uplink control channel on the first transmission resource; if it is determined that the first uplink control channel is detected on the first transmission resource, the network device receives the first uplink control channel on the first transmission resource and receives the second uplink control channel on the second transmission resource; if it is determined that the first uplink control channel is not detected on the first transmission resource, the network device detects the second uplink control channel on the second transmission resource.

For the Case 3, the network device detects the first uplink control channel on the first transmission resource; if it is determined that the first uplink control channel is detected on the first transmission resource, the network device receives the first uplink control channel on the first transmission resource, and does not detect the second uplink control channel on the second transmission resource; if it is determined that the first uplink control channel is not detected on the first transmission resource, the network device detects the second uplink control channel on the second transmission resource.

In some embodiments, the first information is further used to indicate that the terminal device transmits same first uplink control information on the first uplink control channel and the second uplink control channel.

In some embodiments, the first information is further used to indicate that the terminal device transmits information having a low priority in first uplink control information on the first uplink control channel, and transmits information having a high priority in the first uplink control information on the second uplink control channel.

In some embodiments, the first information is further used to indicate that the terminal device transmits channel state information on the first uplink control channel, and transmits hybrid automatic repeat request information or scheduling request information on the second uplink control channel.

Those skilled in the art should understand that embodiments on the network device side can be understood with reference to the embodiments on the terminal device side. The information feedback method on the network device side and the information feedback method on the terminal device have corresponding processes and effects.

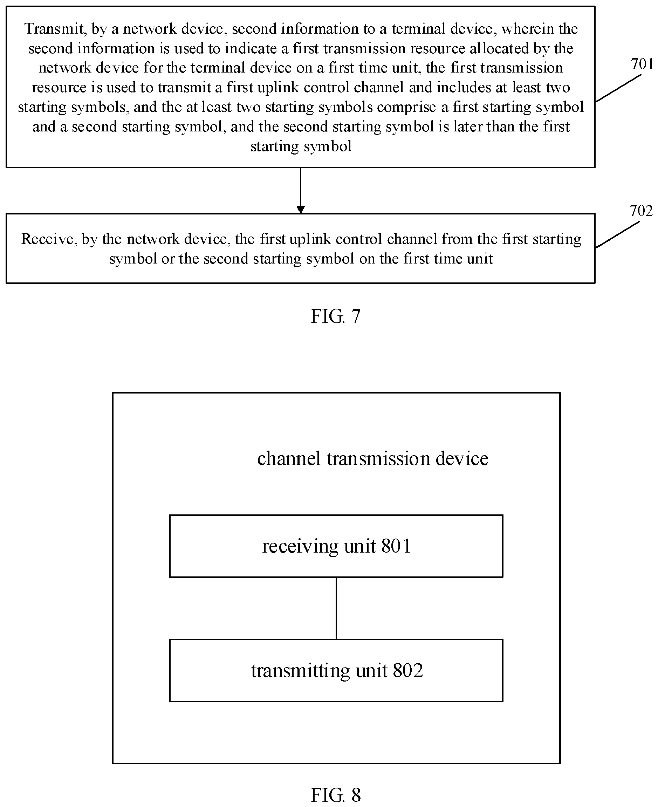

FIG. 7 is a schematic flowchart of a channel transmission method according to an embodiment of the present disclosure. In the embodiment of the present disclosure, as shown in FIG. 7, the channel transmission method includes the following steps:
In step 701, the network device transmits second information to the terminal device. The second information is used to indicate a first transmission resource allocated by the network device for the terminal device on a first time unit, the first transmission resource is used to transmit a first uplink control channel and includes at least two starting symbols, and the at least two starting symbols include a first starting symbol and a second starting symbol, and the second starting symbol is later than the first starting symbol.

In step 702, the network device receives the first uplink control channel from the first starting symbol or the second starting symbol on the first time unit.

According to embodiments, receiving, by the network device, the first uplink control channel from the first starting symbol or the second starting symbol on the first time unit, includes:
detecting, by the network device, the first uplink control channel from the first starting symbol;
if it is determined that the first uplink control channel is detected from the first starting symbol, receiving, by the network device, the first uplink control channel from the first starting symbol; and
if it is determined that the first uplink control channel is not detected from the first starting symbol, detecting, by the network device, the first uplink control channel from the second starting symbol.

According to embodiments of the present disclosure, when the network device receives the first uplink control channel from the first starting symbol, the first uplink control channel carries first transmission information, and the first transmission information is obtained by rate matching from the first starting symbol after the first uplink control information is encoded.

According to embodiments of the present disclosure, when the network device receives the first uplink control channel from the second starting symbol, the information actually transmitted in the first uplink control channel may include one of the following cases:
Case 1: when the network device receives the first uplink control channel from the second starting symbol, the first uplink control channel carries second transmission information. The second transmission information is a part of the first transmission information, and the second transmission information is obtained by rate matching from the second starting symbol after the first uplink control information is encoded.
Case 2: when the network device receives the first uplink control channel from the second starting symbol, the first uplink control channel carries second transmission information. The second transmission information is a part of the first transmission information, and the second transmission information is obtained by rate matching from the first starting symbol after the first uplink control information is encoded.
Case 3: when the network device receives the first uplink control channel from the second starting symbol, the first uplink control channel carries second transmission information. The second transmission information is obtained by rate matching from the second starting symbol after the first uplink control information is encoded.

Those skilled in the art should understand that the embodiments on the network device side can be understood with reference to the embodiments on the terminal device side. The information feedback methods on the network device side and the information feedback methods on the terminal device have corresponding processes and effects.

FIG. 8 is a schematic block diagram of a channel transmission device according to an embodiment of the present disclosure. As shown in FIG. 8, the channel transmission device includes a receiving unit 801 and a transmitting unit 802.

The receiving unit 801 is configure to receive first information. The first information is used to indicate at least two transmission resources allocated by a network device for the terminal device on a first time unit, the at least two transmission resources include a first transmission resource and a second transmission resource, the first transmission resource is used to transmit a first uplink control channel, and the second transmission resource is used to transmit a second uplink control channel.

The transmitting unit 802 is configured to transmit the first uplink control channel and/or the second uplink control channel on the first time unit based on a channel detection result.

According to an exemplary embodiment, a starting symbol of the second transmission resource is later than a starting symbol of the first transmission resource; and
the first transmission resource and the second transmission resource are spaced by at least one symbol in a time domain.

According to an exemplary embodiment, the channel transmission device further includes a processing unit:
the processing unit is configured to perform channel detection before the starting symbol of the first transmission resource; if it is determined that the channel detection is successful before the starting symbol of the first transmission resource, the transmitting unit 802 transmits the first uplink control channel from the starting symbol of the first transmission resource; and if it is determined that the channel detection fails before the starting symbol of the first transmission resource, the transmitting unit 802 does not transmit the first uplink control channel; and the processing unit is configured to perform the channel detection before the starting symbol of the second transmission resource; if it is determined that the channel detection is successful before the starting symbol of the second transmission resource, the transmitting unit transmits the second uplink control channel from the starting symbol of the second transmission resource; and if it is determined that the channel detection fails before the starting symbol of the second transmission resource, the transmitting unit does not transmits the second uplink control channel.

According to an exemplary embodiment, a starting symbol of the second transmission resource is later than a starting symbol of the first transmission resource; and
wherein the first transmission resource and the second transmission resource are adjacent in a time domain and do not overlap one another.

According to an exemplary embodiment, the channel transmission device further includes a processing unit;
the processing unit is configured to perform channel detection before the starting symbol of the first transmission resource; if it is determined that the channel detection is successful before the starting symbol of the first transmission resource, the transmitting unit 802 transmits the first uplink control channel from the starting symbol of the first transmission resource, and transmits the second uplink control channel after transmission of the first uplink control channel is completed; and if it is determined that the channel detection fails before the starting symbol of the first transmission resource, the transmitting unit 802 does not transmit the first uplink control channel, and channel detection is performed before the starting symbol of the second transmission resource; if the processing unit determines that the channel detection is successful before the starting symbol of the second transmission resource, the transmitting unit 802 transmits the second uplink control channel from the starting symbol of the second transmission resource.

According to an exemplary embodiment, a starting symbol of the second transmission resource is later than a starting symbol of the first transmission resource; and
there is at least one symbol overlap between the first transmission resource and the second transmission resource in a time domain.

According to an exemplary embodiment, the channel transmission device further include a processing unit:
the processing unit is configured to perform channel detection before the starting symbol of the first transmission resource; if it is determined that the channel detection is successful before the starting symbol of the first transmission resource, the transmitting unit 802 transmits the first uplink control channel from the starting symbol of the first transmission resource, and does not transmit the second uplink control channel; if the processing unit determines that the channel detection fails before the starting symbol of the first transmission resource, the transmitting unit 802 does not transmit the first uplink control channel, and channel detection is performed before the starting symbol of the second transmission resource; and if it is determined that the channel detection is successful before the starting symbol of the second transmission resource, the transmitting unit 802 transmits the second uplink control channel from the starting symbol of the second transmission resource.

According to an exemplary embodiment, the transmitting unit 802 transmits same first uplink control information on the first uplink control channel and the second uplink control channel.

According to an exemplary embodiment, the transmitting unit 802 transmits information having a low priority in first uplink control information on the first uplink control channel, and transmits information having a high priority in the first uplink control information on the second uplink control channel.

According to an exemplary embodiment, the transmitting unit 802 transmits channel state information on the first uplink control channel, and transmits hybrid automatic repeat request information or scheduling request information on the second uplink control channel.

Those skilled in the art should understand that the function of each unit in the channel transmission device shown in FIG. 8 can be understood by referring to the related description of the foregoing channel transmission methods. The function of each unit in the channel transmission device shown in FIG 8 can be realized by a program running on a processor, or by specific logic circuit.

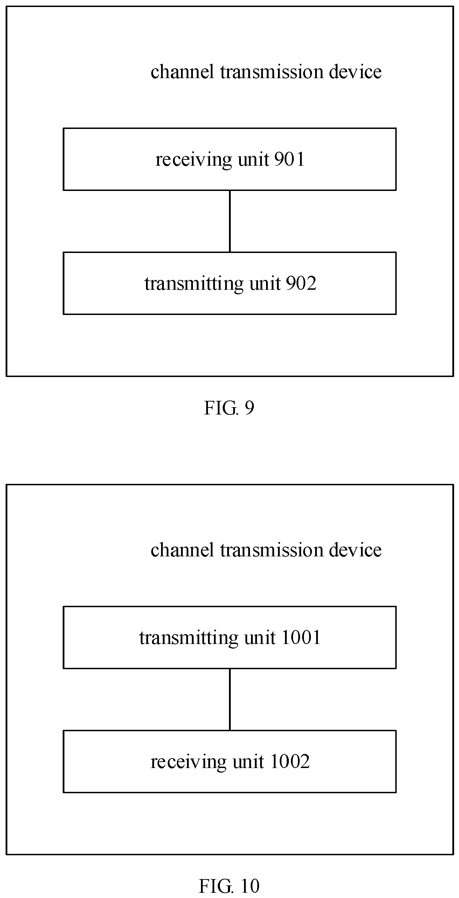

FIG. 9 is a schematic block diagram of a channel transmission device according to an embodiment of the present disclosure. As shown in FIG. 9, the channel transmission device include a receiving unit 901 and a transmitting unit 902.

The receiving unit 901 is configured to receive second information, wherein the second information is used to indicate a first transmission resource allocated by a network device for the terminal device on a first time unit, the first transmission resource is used to transmit a first uplink control channel and includes at least two starting symbols, and the at least two starting symbols include a first starting symbol and a second starting symbol, and the second starting symbol is later than the first starting symbol.

The transmitting unit 902 is configured to transmit the first uplink control channel from the first starting symbol or the second starting symbol on the first time unit based on a channel detection result.

According to an exemplary embodiment, the channel transmission device further include a processing unit:
the processing unit is configured to perform channel detection before the first starting symbol; if it is determined that the channel detection is successful before the first starting symbol, the transmitting unit 902 transmits the first uplink control channel from the first starting symbol; if it is determined that the channel detection fails before the first starting symbol, the channel detection is performed before the second starting symbol; if it is determined that the channel detection is successful before the second starting symbol, the transmitting unit 902 transmits the first uplink control channel from the second starting symbol; if it is determined that the channel detection fails before the second starting symbol, the transmitting unit 902 does not transmit the first uplink control channel.

According to an exemplary embodiment, when the transmitting unit 902 transmits the first uplink control channel from the first starting symbol, the first uplink control channel carries first transmission information, and the first transmission information is obtained by rate matching from the first starting symbol after the first uplink control information is encoded; and
when the transmitting unit 902 transmits the first uplink control channel from the second starting symbol, the first uplink control channel carries second transmission information, the second transmission information is a part of the first transmission information and is obtained by rate matching from the second starting symbol after the first uplink control information is encoded.

According to an exemplary embodiment, when the transmitting unit 902 transmits the first uplink control channel from the first starting symbol, the first uplink control channel carries first transmission information, and the first transmission information is obtained by rate matching from the first starting symbol after the first uplink control information is encoded; and

when the transmitting unit 902 transmits the first uplink control channel from the second starting symbol, the first uplink control channel carries second transmission information, the second transmission information is a part of the first transmission information and is obtained by rate matching from the first starting symbol after the first uplink control information is encoded.

According to an exemplary embodiment, when the transmitting unit 902 transmits the first uplink control channel from the first starting symbol, the first uplink control channel carries first transmission information, and the first transmission information is obtained by rate matching from the first starting symbol after the first uplink control information is encoded; and
when the transmitting unit 902 transmits the first uplink control channel from the second starting symbol, the first uplink control channel carries second transmission information, and the second transmission information is obtained by rate matching from the second starting symbol after the first uplink control information is encoded.

Those skilled in the art should understand that the function of each unit in the channel transmission device shown in FIG. 9 can be understood by referring to the related description of the foregoing channel transmission methods. The function of each unit in the channel transmission device shown in FIG. 9 can be realized by a program running on a processor, or by specific logic circuit.

FIG. 10 is a schematic block diagram of a channel transmission device according to an embodiment of the present disclosure. As shown in FIG. 10, the channel transmission device includes a transmitting unit 1001 and a receiving unit 1002.

The transmitting unit 1001 is configured to transmit first information to a terminal device, wherein the first information is used to indicate at least two transmission resources allocated by the network device for the terminal device on a first time unit, the at least two transmission resources include a first transmission resource and a second transmission resource, the first transmission resource is used to transmit a first uplink control channel, and the second transmission resource is used to transmit a second uplink control channel.

The receiving unit 1002 is configured to receive the first uplink control channel and/or the second uplink control channel on the first time unit.

According to an exemplary embodiment, a starting symbol of the second transmission resource is later than a starting symbol of the first transmission resource; and
the first transmission resource and the second transmission resource are spaced by at least one symbol in a time domain..

According to an exemplary embodiment, the receiving unit 1002 is configured to:
detect the first uplink control channel on the first transmission resource, and detect the second uplink control channel on the second transmission resource.

According to an exemplary embodiment, a starting symbol of the second transmission resource is later than a starting symbol of the first transmission resource; and
the first transmission resource and the second transmission resource are adjacent in a time domain and do not overlap one another.

According to an exemplary embodiment, the receiving unit 1002 is configured to:
detect the first uplink control channel on the first transmission resource;
if it is determined that the first uplink control channel is detected on the first transmission resource, receive the first uplink control channel on the first transmission resource and receive the second uplink control channel on the second transmission resource; and
if it is determined that the first uplink control channel is not detected on the first transmission resource, detect the second uplink control channel on the second transmission resource.

According to an exemplary embodiment, a starting symbol of the second transmission resource is later than a starting symbol of the first transmission resource; and
there is at least one symbol overlap between the first transmission resource and the second transmission resource in a time domain.

According to an exemplary embodiment, the receiving unit 1002 is configured to:
detect the first uplink control channel on the first transmission resource;
if it is determined that the first uplink control channel is detected on the first transmission resource, receive the first uplink control channel on the first transmission resource, and not detect the second uplink control channel on the second transmission resource; and
if it is determined that the first uplink control channel is not detected on the first transmission resource, detect the second uplink control channel on the second transmission resource.

According to an exemplary embodiment, the first information is further used to indicate that the terminal device transmits same first uplink control information on the first uplink control channel and the second uplink control channel.

According to an exemplary embodiment, the first information is further used to indicate that the terminal device transmits information having a low priority in first uplink control information on the first uplink control channel, and transmits information having a high priority in the first uplink control information on the second uplink control channel.

According to an exemplary embodiment, the first information is further used to indicate that the terminal device transmits channel state information on the first uplink control channel, and transmits hybrid automatic repeat request information or scheduling request information on the second uplink control channel.

Those skilled in the art should understand that the function of each unit in the channel transmission device shown in FIG 10 can be understood by referring to the related description of the foregoing channel transmission methods. The function of each unit in the channel transmission device shown in FIG 10 can be realized by a program running on a processor, or by specific logic circuit.

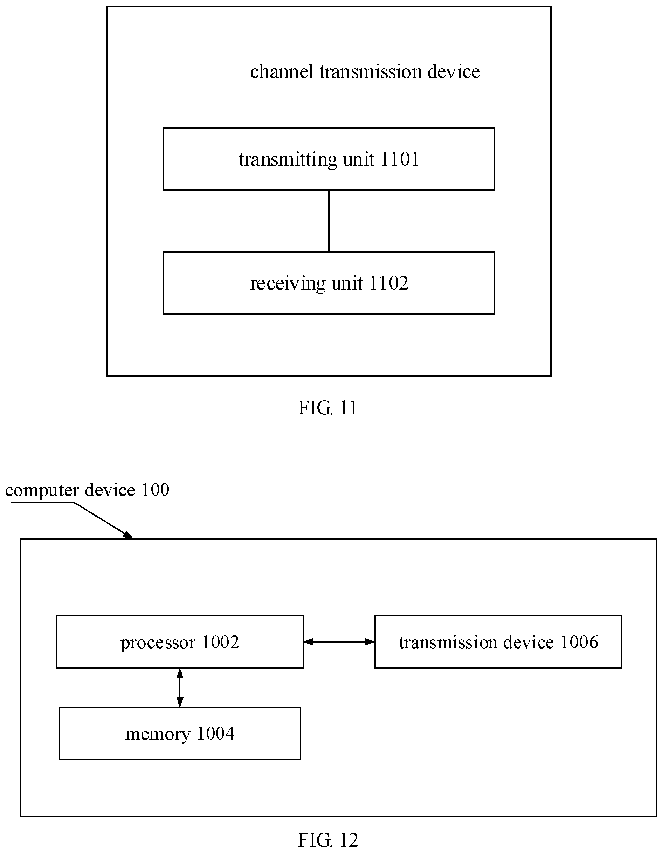

FIG. 11 is a schematic block diagram of a channel transmission device according to an embodiment of the present disclosure. As shown in FIG. 11, the channel transmission device includes a transmitting unit 1101 and a receiving unit 1102.

The transmitting unit 1101 is configured to transmit second information to a terminal device. The second information is used to indicate a first transmission resource allocated by the network device for the terminal device on a first time unit, the first transmission resource is used to transmit a first uplink control channel and includes at least two starting symbols, and the at least two starting symbols include a first starting symbol and a second starting symbol, and the second starting symbol is later than the first starting symbol.

The receiving unit 1102 is configured to receive the first uplink control channel from the first starting symbol or the second starting symbol on the first time unit.

According to an exemplary embodiment, the receiving unit 1102 is configured to:
detect the first uplink control channel from the first starting symbol;
if it is determined that the first uplink control channel is detected from the first starting symbol, receive the first uplink control channel from the first starting symbol; and
if it is determined that the first uplink control channel is not detected from the first starting symbol, detect the first uplink control channel from the second starting symbol.

According to an exemplary embodiment, when the receiving unit 1102 receives the first uplink control channel from the first starting symbol, the first uplink control channel carries first transmission information, and the first transmission information is obtained by rate matching from the first starting symbol after the first uplink control information is encoded;
when the receiving unit 1102 receives the first uplink control channel from the second starting symbol, the first uplink control channel carries second transmission information, the second transmission information is a part of the first transmission information and is obtained by rate matching from the second starting symbol after the first uplink control information is encoded.

According to an exemplary embodiment, when the receiving unit 1102 receives the first uplink control channel from the first starting symbol, the first uplink control channel carries first transmission information, and the first transmission information is obtained by rate matching from the first starting symbol after the first uplink control information is encoded; and
when the receiving unit 1102 receives the first uplink control channel from the second starting symbol, the first uplink control channel carries second transmission information, the second transmission information is a part of the first transmission information and is obtained by rate matching from the first starting symbol after the first uplink control information is encoded.

According to an exemplary embodiment, when the receiving unit 1102 receives the first uplink control channel from the first starting symbol, the first uplink control channel carries first transmission information, and the first transmission information is obtained by rate matching from the first starting symbol after the first uplink control information is encoded; and
when the receiving unit 1102 receives the first uplink control channel from the second starting symbol, the first uplink control channel carries second transmission information, and the second transmission information is obtained by rate matching from the second starting symbol after the first uplink control information is encoded.

Those skilled in the art should understand that the function of each unit in the channel transmission device shown in FIG. 11 can be understood by referring to the related description of the foregoing channel transmission methods. The function of each unit in the channel transmission device shown in FIG. 11 can be realized by a program running on a processor, or by specific logic circuit.

In embodiments of the present disclosure, if the channel transmission device is implemented in the form of a software functional module and sold or used as an independent product, it may also be stored in a computer-readable storage medium. Based on such an understanding, the technical solutions of the embodiments of the present disclosure that are essential or contribute to the existing technologies can be embodied in the form of software products. The computer software product is stored in a storage medium and includes several instructions to cause a computer device (which may be a personal computer, a server, or a network device) to perform all or part of the methods described in the embodiments of the present disclosure. The storage medium includes various mediums that can store program codes, such as a U disk, a mobile hard disk, a read only memory (ROM), a magnetic disk, or an optical disk. In this way, the embodiments of the present disclosure are not limited to any specific combination of hardware and software.

An embodiment of the present disclosure further provides a computer storage medium in which computer-executable instructions are stored. When the computer-executable instructions are executed by a processor, the processor is caused to implement the channel transmission methods according to embodiments of the present disclosure.

FIG. 12 is a schematic structural diagram of a computer device according to an embodiment of the present disclosure. The computer device may be a terminal device or a network device. As shown in FIG. 12, the computer device 100 may include one or more (only one shown in the figure) processors 1002, a memory 1004 for storing data, and a transmission device 1006 for performing a communication function. The processors 1002 may include but are not limited to a microprocessor (MCU, Micro Controller Unit) or a programmable logic device (FPGA, Field Programmable Gate Array). A person of ordinary skill in the art can understand that the structure shown in FIG. 12 is only schematic, and it does not limit the structure of the electronic device. For example, the computer device 100 may also include more or fewer components than those shown in FIG. 12, or have a different configuration from that shown in FIG. 12.

The memory 1004 may be used to store software programs and modules of application software, such as program instructions/modules corresponding to the methods in the embodiments of the present disclosure. The one or more processors 1002 implement various functional applications and data processing by running the software programs and modules stored in the memory 1004, i.e., to implement the methods described above. The memory 1004 may include a high-speed random access memory, and may further include a non-volatile memory, such as one or more magnetic storage devices, flash memory, or other non-volatile solid-state memory. In some examples, the memory 1004 may further include memories remotely set with respect to the processor 1002, and these remote memories may be connected to the computer device 100 through a network. Examples of the above network include, but are not limited to, the Internet, an intranet, a local area network, a mobile communication network, and any combinations thereof.

The transmission device 1006 is used for receiving or transmitting data via a network. The examples of the network may include a wireless network provided by a communication provider of the computer device 100. In one example, the transmission device 1006 includes a network adapter (NIC, Network Interface Controller), which can be connected to other network devices through a base station so as to communicate with the Internet. In one example, the transmission device 1006 may be a radio frequency (RF) module, which is used to communicate with the Internet in a wireless manner.

The technical solutions described in the embodiments of the present disclosure can be arbitrarily combined if such combination will not result in conflict.

In the embodiments provided by the present disclosure, it should be understood that the disclosed methods and smart devices may be implemented in other ways. The device embodiments described above are only schematic. For example, the division of the units is only a logical function division. In actual implementations, there may be another division manner, such as multiple units or components may be combined, or can be integrated into another system, or some features can be ignored or not implemented. In addition, the coupling, direct coupling, or communication connection between the shown or discussed components may be realized through some interfaces. The indirect coupling or communication connection of the devices or units may be electrical, mechanical, or in other forms.

The units described above as separate components may or may not be physically separated, and the components shown as units may or may not be physical units, which may be located in one place or distributed over multiple network units. Some or all of the units may be selected according to actual needs to achieve the objectives of the solutions of the embodiments.

In addition, functional units in embodiments of the present disclosure may be integrated into a second processing unit, or each unit may be separately used as a unit, or two or more units may be integrated into one unit. The above integrated unit may be implemented in the form of hardware, or in the form of hardware plus software functional units.

The above are only exemplary embodiments of the present disclosure, but the scope of protection of the present disclosure is not limited to this. Any person skilled in the art can easily think of changes or replacements within the technical scope disclosed by the present disclosure, and such changes or replacements fall within the scope of the present disclosure.

## Claims

1. A channel transmission method, comprising:
receiving, by a terminal device, first information, wherein the first information is used to indicate at least two transmission resources allocated by a network device for the terminal device on a first time unit, the at least two transmission resources comprise a first transmission resource and a second transmission resource, the first transmission resource is used to transmit a first uplink control channel, and the second transmission resource is used to transmit a second uplink control channel; and
transmitting, by the terminal device, the first uplink control channel and/or the second uplink control channel on the first time unit based on a channel detection result.

2. The method according to claim 1, wherein a starting symbol of the second transmission resource is later than a starting symbol of the first transmission resource; and
wherein the first transmission resource and the second transmission resource are spaced by at least one symbol in a time domain.

3. The method according to claim 2, wherein transmitting, by the terminal device, the first uplink control channel and/or the second uplink control channel on the first time unit based on a channel detection result comprises:
performing, by the terminal device, channel detection before the starting symbol of the first transmission resource; if it is determined that the channel detection is successful before the starting symbol of the first transmission resource, transmitting, by the terminal device, the first uplink control channel from the starting symbol of the first transmission resource; and if it is determined that the channel detection fails before the starting symbol of the first transmission resource, the terminal device not transmitting the first uplink control channel; and
performing, by the terminal device, the channel detection before the starting symbol of the second transmission resource; if it is determined that the channel detection is successful before the starting symbol of the second transmission resource, transmitting, by the terminal device, the second uplink control channel from the starting symbol of the second transmission resource; and if it is determined that the channel detection fails before the starting symbol of the second transmission resource, the terminal device not transmitting the second uplink control channel.

4. The method according to claim 1, wherein a starting symbol of the second transmission resource is later than a starting symbol of the first transmission resource; and
wherein the first transmission resource and the second transmission resource are adjacent in a time domain and do not overlap one another.

5. The method according to claim 4, wherein transmitting, by the terminal device, the first uplink control channel and/or the second uplink control channel on the first time unit based on a channel detection result, comprises:
performing, by the terminal device, channel detection before the starting symbol of the first transmission resource;
if it is determined that the channel detection is successful before the starting symbol of the first transmission resource, transmitting, by the terminal device, the first uplink control channel from the starting symbol of the first transmission resource, and transmitting the second uplink control channel after transmission of the first uplink control channel is completed; and
if it is determined that the channel detection fails before the starting symbol of the first transmission resource, the terminal device not transmitting the first uplink control channel, and performing channel detection before the starting symbol of the second transmission resource; if it is determined that the channel detection is successful before the starting symbol of the second transmission resource, transmitting, by the terminal device, the second uplink control channel from the starting symbol of the second transmission resource.

6. The method according to claim 1, wherein a starting symbol of the second transmission resource is later than a starting symbol of the first transmission resource; and
wherein there is at least one symbol overlap between the first transmission resource and the second transmission resource in a time domain.

7. The method according to claim 6, wherein transmitting, by the terminal device, the first uplink control channel and/or the second uplink control channel on the first time unit based on a channel detection result, comprises:
performing, by the terminal device, channel detection before the starting symbol of the first transmission resource;
if it is determined that the channel detection is successful before the starting symbol of the first transmission resource, transmitting, by the terminal device, the first uplink control channel from the starting symbol of the first transmission resource, and not transmitting the second uplink control channel;
if it is determined that the channel detection fails before the starting symbol of the first transmission resource, the terminal device not transmitting the first uplink control channel, and performing channel detection before the starting symbol of the second transmission resource; if it is determined that the channel detection is successful before the starting symbol of the second transmission resource, transmitting, by the terminal device, the second uplink control channel from the starting symbol of the second transmission resource.

8. The method according to any one of claims 1 to 7, wherein the terminal device transmits same first uplink control information on the first uplink control channel and the second uplink control channel.

9. The method according to any one of claims 1 to 7, wherein the terminal device transmits information having a low priority in first uplink control information on the first uplink control channel, and transmits information having a high priority in the first uplink control information on the second uplink control channel.

10. The method according to any one of claims 1 to 7, wherein the terminal device transmits channel state information on the first uplink control channel, and transmits hybrid automatic repeat request information or scheduling request information on the second uplink control channel.

11. A channel transmission method, comprising:
receiving, by the terminal device, second information, wherein the second information is used to indicate a first transmission resource allocated by a network device for the terminal device on a first time unit, the first transmission resource is used to transmit a first uplink control channel and comprises at least two starting symbols, and the at least two starting symbols comprise a first starting symbol and a second starting symbol, and the second starting symbol is later than the first starting symbol; and
transmitting, by the terminal device, the first uplink control channel from the first starting symbol or the second starting symbol on the first time unit based on a channel detection result.

12. The method according to claim 11, wherein transmitting, by the terminal device, the first uplink control channel from the first starting symbol or the second starting symbol on the first time unit based on a channel detection result comprises:
performing, by the terminal device, channel detection before the first starting symbol;
if it is determined that the channel detection is successful before the first starting symbol, transmitting, by the terminal device, the first uplink control channel from the first starting symbol;
if it is determined that the channel detection fails before the first starting symbol, performing, by the terminal device, the channel detection before the second starting symbol; if it is determined that the channel detection is successful before the second starting symbol, transmitting, by the terminal device, the first uplink control channel from the second starting symbol; if it is determined that the channel detection fails before the second starting symbol, the terminal device not transmitting the first uplink control channel.

13. The method according to claim 11 or 12, wherein when the terminal device transmits the first uplink control channel from the first starting symbol, the first uplink control channel carries first transmission information, and the first transmission information is obtained by rate matching from the first starting symbol after the first uplink control information is encoded; and
when the terminal device transmits the first uplink control channel from the second starting symbol, the first uplink control channel carries second transmission information, the second transmission information is a part of the first transmission information and is obtained by rate matching from the second starting symbol after the first uplink control information is encoded.

14. The method according to claim 11 or 12, wherein when the terminal device transmits the first uplink control channel from the first starting symbol, the first uplink control channel carries first transmission information, and the first transmission information is obtained by rate matching from the first starting symbol after the first uplink control information is encoded; and
when the terminal device transmits the first uplink control channel from the second starting symbol, the first uplink control channel carries second transmission information, the second transmission information is a part of the first transmission information and is obtained by rate matching from the first starting symbol after the first uplink control information is encoded.

15. The method according to claim 11 or 12, wherein when the terminal device transmits the first uplink control channel from the first starting symbol, the first uplink control channel carries first transmission information, and the first transmission information is obtained by rate matching from the first starting symbol after the first uplink control information is encoded; and
when the terminal device transmits the first uplink control channel from the second starting symbol, the first uplink control channel carries second transmission information, and the second transmission information is obtained by rate matching from the second starting symbol after the first uplink control information is encoded.

16. A channel transmission method, comprising:
transmitting, by a network device, first information to a terminal device, wherein the first information is used to indicate at least two transmission resources allocated by the network device for the terminal device on a first time unit, the at least two transmission resources comprise a first transmission resource and a second transmission resource, the first transmission resource is used to transmit a first uplink control channel, and the second transmission resource is used to transmit a second uplink control channel; and
receiving, by the network device, the first uplink control channel and/or the second uplink control channel on the first time unit.

17. The method according to claim 16, wherein a starting symbol of the second transmission resource is later than a starting symbol of the first transmission resource; and
wherein the first transmission resource and the second transmission resource are spaced by at least one symbol in a time domain..

18. The method according to claim 17, wherein receiving, by the network device, the first uplink control channel and/or the second uplink control channel on the first time unit, comprises:
detecting, by the network device, the first uplink control channel on the first transmission resource, and detecting the second uplink control channel on the second transmission resource.

19. The method according to claim 16, wherein a starting symbol of the second transmission resource is later than a starting symbol of the first transmission resource; and
wherein the first transmission resource and the second transmission resource are adjacent in a time domain and do not overlap one another.

20. The method according to claim 19, wherein receiving, by the network device, the first uplink control channel and/or the second uplink control channel on the first time unit, comprises:
detecting, by the network device, the first uplink control channel on the first transmission resource;
if it is determined that the first uplink control channel is detected on the first transmission resource, receiving, by the network device, the first uplink control channel on the first transmission resource and receiving the second uplink control channel on the second transmission resource; and
if it is determined that the first uplink control channel is not detected on the first transmission resource, detecting, by the network device, the second uplink control channel on the second transmission resource.

21. The method according to claim 16, wherein a starting symbol of the second transmission resource is later than a starting symbol of the first transmission resource; and
wherein there is at least one symbol overlap between the first transmission resource and the second transmission resource in a time domain.

22. The method according to claim 21, wherein receiving, by the network device, the first uplink control channel and/or the second uplink control channel on the first time unit, comprises:
detecting, by the network device, the first uplink control channel on the first transmission resource;
if it is determined that the first uplink control channel is detected on the first transmission resource, receiving, by the network device, the first uplink control channel on the first transmission resource, and not detecting the second uplink control channel on the second transmission resource; and
if it is determined that the first uplink control channel is not detected on the first transmission resource, detecting, by the network device, the second uplink control channel on the second transmission resource.

23. The method according to any one of claims 16 to 22, wherein the first information is further used to indicate that the terminal device transmits same first uplink control information on the first uplink control channel and the second uplink control channel.

24. The method according to any one of claims 16 to 22, wherein the first information is further used to indicate that the terminal device transmits information having a low priority in first uplink control information on the first uplink control channel, and transmits information having a high priority in the first uplink control information on the second uplink control channel.

25. The method according to any one of claims 16 to 22, wherein the first information is further used to indicate that the terminal device transmits channel state information on the first uplink control channel, and transmits hybrid automatic repeat request information or scheduling request information on the second uplink control channel.

26. A channel transmission method, comprising:
transmitting, by a network device, second information to a terminal device, wherein the second information is used to indicate a first transmission resource allocated by the network device for the terminal device on a first time unit, the first transmission resource is used to transmit a first uplink control channel and comprises at least two starting symbols, and the at least two starting symbols comprise a first starting symbol and a second starting symbol, and the second starting symbol is later than the first starting symbol; and
receiving, by the network device, the first uplink control channel from the first starting symbol or the second starting symbol on the first time unit.

27. The method according to claim 26, wherein receiving, by the network device, the first uplink control channel from the first starting symbol or the second starting symbol on the first time unit, comprises:
detecting, by the network device, the first uplink control channel from the first starting symbol;
if it is determined that the first uplink control channel is detected from the first starting symbol, receiving, by the network device, the first uplink control channel from the first starting symbol; and
if it is determined that the first uplink control channel is not detected from the first starting symbol, detecting, by the network device, the first uplink control channel from the second starting symbol.

28. The method according to claim 26 or 27, wherein when the network device receives the first uplink control channel from the first starting symbol, the first uplink control channel carries first transmission information, and the first transmission information is obtained by rate matching from the first starting symbol after the first uplink control information is encoded;
when the network device receives the first uplink control channel from the second starting symbol, the first uplink control channel carries second transmission information, the second transmission information is a part of the first transmission information and is obtained by rate matching from the second starting symbol after the first uplink control information is encoded.

29. The method according to claim 26 or 27, wherein when the network device receives the first uplink control channel from the first starting symbol, the first uplink control channel carries first transmission information, and the first transmission information is obtained by rate matching from the first starting symbol after the first uplink control information is encoded; and
when the network device receives the first uplink control channel from the second starting symbol, the first uplink control channel carries second transmission information, the second transmission information is a part of the first transmission information and is obtained by rate matching from the first starting symbol after the first uplink control information is encoded.

30. The method according to claim 26 or 27, wherein when the network device receives the first uplink control channel from the first starting symbol, the first uplink control channel carries first transmission information, and the first transmission information is obtained by rate matching from the first starting symbol after the first uplink control information is encoded; and
when the network device receives the first uplink control channel from the second starting symbol, the first uplink control channel carries second transmission information, and the second transmission information is obtained by rate matching from the second starting symbol after the first uplink control information is encoded.

31. A channel transmission device, comprising:
a receiving unit configure to receive first information, wherein the first information is used to indicate at least two transmission resources allocated by a network device for the terminal device on a first time unit, the at least two transmission resources comprise a first transmission resource and a second transmission resource, the first transmission resource is used to transmit a first uplink control channel, and the second transmission resource is used to transmit a second uplink control channel; and
a transmitting unit configured to transmit the first uplink control channel and/or the second uplink control channel on the first time unit based on a channel detection result.

32. The device according to claim 31, wherein a starting symbol of the second transmission resource is later than a starting symbol of the first transmission resource; and
wherein the first transmission resource and the second transmission resource are spaced by at least one symbol in a time domain.

33. The device according to claim 32, wherein the device further comprises a processing unit:
wherein the processing unit is configured to perform channel detection before the starting symbol of the first transmission resource; if it is determined that the channel detection is successful before the starting symbol of the first transmission resource, the transmitting unit transmits the first uplink control channel from the starting symbol of the first transmission resource; and if it is determined that the channel detection fails before the starting symbol of the first transmission resource, the transmitting unit does not transmit the first uplink control channel; and
wherein the processing unit is configured to perform the channel detection before the starting symbol of the second transmission resource; if it is determined that the channel detection is successful before the starting symbol of the second transmission resource, the transmitting unit transmits the second uplink control channel from the starting symbol of the second transmission resource; and if it is determined that the channel detection fails before the starting symbol of the second transmission resource, the transmitting unit does not transmits the second uplink control channel.

34. The device according to claim 31, wherein a starting symbol of the second transmission resource is later than a starting symbol of the first transmission resource; and
wherein the first transmission resource and the second transmission resource are adjacent in a time domain and do not overlap one another.

35. The device according to claim 34, wherein the device further comprises a processing unit;
wherein the processing unit is configured to perform channel detection before the starting symbol of the first transmission resource; if it is determined that the channel detection is successful before the starting symbol of the first transmission resource, the transmitting unit transmits the first uplink control channel from the starting symbol of the first transmission resource, and transmits the second uplink control channel after transmission of the first uplink control channel is completed; and if it is determined that the channel detection fails before the starting symbol of the first transmission resource, the transmitting unit does not transmit the first uplink control channel, and channel detection is performed before the starting symbol of the second transmission resource; if the processing unit determines that the channel detection is successful before the starting symbol of the second transmission resource, the transmitting unit transmits the second uplink control channel from the starting symbol of the second transmission resource.

36. The device according to claim 31, wherein a starting symbol of the second transmission resource is later than a starting symbol of the first transmission resource; and
wherein there is at least one symbol overlap between the first transmission resource and the second transmission resource in a time domain.

37. The device according to claim 36, wherein the device further comprises a processing unit:
wherein the processing unit is configured to perform channel detection before the starting symbol of the first transmission resource; if it is determined that the channel detection is successful before the starting symbol of the first transmission resource, the transmitting unit transmits the first uplink control channel from the starting symbol of the first transmission resource, and does not transmit the second uplink control channel; if the processing unit determines that the channel detection fails before the starting symbol of the first transmission resource, the transmitting unit does not transmit the first uplink control channel, and channel detection is performed before the starting symbol of the second transmission resource; and if it is determined that the channel detection is successful before the starting symbol of the second transmission resource, the transmitting unit transmits the second uplink control channel from the starting symbol of the second transmission resource.

38. The device according to any one of claims 31 to 37, wherein the transmitting unit transmits same first uplink control information on the first uplink control channel and the second uplink control channel.

39. The device according to any one of claims 31 to 37, wherein the transmitting unit transmits information having a low priority in first uplink control information on the first uplink control channel, and transmits information having a high priority in the first uplink control information on the second uplink control channel.

40. The device according to any one of claims 31 to 37, wherein the transmitting unit transmits channel state information on the first uplink control channel, and transmits hybrid automatic repeat request information or scheduling request information on the second uplink control channel.

41. A channel transmission device, comprising:
a receiving unit configured to receive second information, wherein the second information is used to indicate a first transmission resource allocated by a network device for the terminal device on a first time unit, the first transmission resource is used to transmit a first uplink control channel and comprises at least two starting symbols, and the at least two starting symbols comprise a first starting symbol and a second starting symbol, and the second starting symbol is later than the first starting symbol; and
a transmitting unit configured to transmit the first uplink control channel from the first starting symbol or the second starting symbol on the first time unit based on a channel detection result.

42. The device according to claim 41, wherein the device further comprises a processing unit:
wherein the processing unit is configured to perform channel detection before the first starting symbol; if it is determined that the channel detection is successful before the first starting symbol, the transmitting unit transmits the first uplink control channel from the first starting symbol; if it is determined that the channel detection fails before the first starting symbol, the channel detection is performed before the second starting symbol; if it is determined that the channel detection is successful before the second starting symbol, the transmitting unit transmits the first uplink control channel from the second starting symbol; if it is determined that the channel detection fails before the second starting symbol, the transmitting unit does not transmit the first uplink control channel.

43. The device according to claim 41 or 42, wherein when the transmitting unit transmits the first uplink control channel from the first starting symbol, the first uplink control channel carries first transmission information, and the first transmission information is obtained by rate matching from the first starting symbol after the first uplink control information is encoded; and
when the transmitting unit transmits the first uplink control channel from the second starting symbol, the first uplink control channel carries second transmission information, the second transmission information is a part of the first transmission information and is obtained by rate matching from the second starting symbol after the first uplink control information is encoded.

44. The device according to claim 41 or 42, wherein when the transmitting unit transmits the first uplink control channel from the first starting symbol, the first uplink control channel carries first transmission information, and the first transmission information is obtained by rate matching from the first starting symbol after the first uplink control information is encoded; and
when the transmitting unit transmits the first uplink control channel from the second starting symbol, the first uplink control channel carries second transmission information, the second transmission information is a part of the first transmission information and is obtained by rate matching from the first starting symbol after the first uplink control information is encoded.

45. The device according to claim 41 or 42, wherein when the transmitting unit transmits the first uplink control channel from the first starting symbol, the first uplink control channel carries first transmission information, and the first transmission information is obtained by rate matching from the first starting symbol after the first uplink control information is encoded; and
when the transmitting unit transmits the first uplink control channel from the second starting symbol, the first uplink control channel carries second transmission information, and the second transmission information is obtained by rate matching from the second starting symbol after the first uplink control information is encoded.

46. A channel transmission device, comprising:
a transmitting unit configured to transmit first information to a terminal device, wherein the first information is used to indicate at least two transmission resources allocated by the network device for the terminal device on a first time unit, the at least two transmission resources comprise a first transmission resource and a second transmission resource, the first transmission resource is used to transmit a first uplink control channel, and the second transmission resource is used to transmit a second uplink control channel; and
a receiving unit configured to receive the first uplink control channel and/or the second uplink control channel on the first time unit.

47. The device according to claim device 46, wherein a starting symbol of the second transmission resource is later than a starting symbol of the first transmission resource; and
wherein the first transmission resource and the second transmission resource are spaced by at least one symbol in a time domain..

48. The device according to claim 47, wherein the receiving unit is configured to:
detect the first uplink control channel on the first transmission resource, and detect the second uplink control channel on the second transmission resource.

49. The device according to claim 46, wherein a starting symbol of the second transmission resource is later than a starting symbol of the first transmission resource; and
wherein the first transmission resource and the second transmission resource are adjacent in a time domain and do not overlap one another.

50. The device according to claim 49, wherein the receiving unit is configured to:
detect the first uplink control channel on the first transmission resource;
if it is determined that the first uplink control channel is detected on the first transmission resource, receive the first uplink control channel on the first transmission resource and receive the second uplink control channel on the second transmission resource; and
if it is determined that the first uplink control channel is not detected on the first transmission resource, detect the second uplink control channel on the second transmission resource.

51. The device according to claim 46, wherein a starting symbol of the second transmission resource is later than a starting symbol of the first transmission resource; and
wherein there is at least one symbol overlap between the first transmission resource and the second transmission resource in a time domain.

52. The device according to claim 51, wherein the receiving unit is configured to:
detect the first uplink control channel on the first transmission resource;
if it is determined that the first uplink control channel is detected on the first transmission resource, receive the first uplink control channel on the first transmission resource, and not detect the second uplink control channel on the second transmission resource; and
if it is determined that the first uplink control channel is not detected on the first transmission resource, detect the second uplink control channel on the second transmission resource.

53. The device according to any one of claims 46 to 52, wherein the first information is further used to indicate that the terminal device transmits same first uplink control information on the first uplink control channel and the second uplink control channel.

54. The device according to any one of claims 46 to 52, wherein the first information is further used to indicate that the terminal device transmits information having a low priority in first uplink control information on the first uplink control channel, and transmits information having a high priority in the first uplink control information on the second uplink control channel.

55. The device according to any one of claims 46 to 52, wherein the first information is further used to indicate that the terminal device transmits channel state information on the first uplink control channel, and transmits hybrid automatic repeat request information or scheduling request information on the second uplink control channel.

56. A channel transmission device, comprising:
a transmitting unit configured to transmit second information to a terminal device, wherein the second information is used to indicate a first transmission resource allocated by the network device for the terminal device on a first time unit, the first transmission resource is used to transmit a first uplink control channel and comprises at least two starting symbols, and the at least two starting symbols comprise a first starting symbol and a second starting symbol, and the second starting symbol is later than the first starting symbol; and
a receiving unit configured to receive the first uplink control channel from the first starting symbol or the second starting symbol on the first time unit.

57. The device according to claim 56, wherein the receiving unit is configured to:
detect the first uplink control channel from the first starting symbol;
if it is determined that the first uplink control channel is detected from the first starting symbol, receive the first uplink control channel from the first starting symbol; and
if it is determined that the first uplink control channel is not detected from the first starting symbol, detect the first uplink control channel from the second starting symbol.

58. The device according to claim 56 or 57, wherein when the receiving unit receives the first uplink control channel from the first starting symbol, the first uplink control channel carries first transmission information, and the first transmission information is obtained by rate matching from the first starting symbol after the first uplink control information is encoded;
when the receiving unit receives the first uplink control channel from the second starting symbol, the first uplink control channel carries second transmission information, the second transmission information is a part of the first transmission information and is obtained by rate matching from the second starting symbol after the first uplink control information is encoded.

59. The device according to claim 56 or 57, wherein when the receiving unit receives the first uplink control channel from the first starting symbol, the first uplink control channel carries first transmission information, and the first transmission information is obtained by rate matching from the first starting symbol after the first uplink control information is encoded; and
when the receiving unit receives the first uplink control channel from the second starting symbol, the first uplink control channel carries second transmission information, the second transmission information is a part of the first transmission information and is obtained by rate matching from the first starting symbol after the first uplink control information is encoded.

60. The device according to claim 56 or 57, wherein when the receiving unit receives the first uplink control channel from the first starting symbol, the first uplink control channel carries first transmission information, and the first transmission information is obtained by rate matching from the first starting symbol after the first uplink control information is encoded; and
when the receiving unit receives the first uplink control channel from the second starting symbol, the first uplink control channel carries second transmission information, and the second transmission information is obtained by rate matching from the second starting symbol after the first uplink control information is encoded.

61. A computer storage medium on which computer-executable instructions are stored, wherein when the computer-executable instructions are executed by a processor, the processor is caused to implement steps of the method according to any one of claims 1 to 10, or steps of the method according to any one of claims 11 to 15, or steps of the method according to any one of claims 16 to 25, or steps of the method according to any one of claims 26 to 30.
